# EUROPEAN PATENT APPLICATION

(11) **EP 2 722 739 A1**
(43) Date of publication of application: **23.04.2014**
(21) Application number: 12189497.6
(22) Date of filing: 22.10.2012
(51) Int. Cl.: G06F 3/044, G06F 3/0488, G06F 21/36

(54) **System comprising a card and a device comprising a touch sensor**

(71) Applicant: Cartamundi Turnhout N.V., 2300 Turnhout (BE)
(72) Inventor: Verboven, Lander, 2290 Vosselaar (BE); Dehouwer, Marco, 2350 Vosselaar (BE); Dehouwer, Joeri, 2340 Beerse (BE)
(74) Representative: IP Hills NV

(57) **Abstract**

The invention relates to a system comprising a card (1) and a device (100) comprising a touch sensor, wherein said card (1) comprises one or more visual card marks (13, 13a, 13b, 13c) indicative for actions detectable by said touch sensor that have to be performed to enable identification of said card (1) by said device (100). The invention furthermore relates to a card (1) and a device (100) for use in such a system, and a software application which can be run on such a device (100).

## Description

### Field of the Invention

The present invention generally relates to a system comprising a card and a device comprising a touch sensor applying any type of touch technology such as amongst others resistive, infrared (IR) or capacitive touch technology, any other type of touch technology however not being excluded. Capacitive touch sensors are most commonly used in many devices such as laptop track pads, digital audio players, computer displays, mobile phones, mobile devices, tablets and others.

### Background of the Invention

At present, cards are known having an activation code which has to be put in either on a website, either on a downloadable software application, using the keyboard of a mobile phone, a smartphone, a pc or a tablet pc, this in order to activate the card or to unlock online or offline the content thereof. Typical such cards are prepaid cards as amongst others iTunes cards and prepaid sim cards.

With such cards, it is common practice that serial numbers of more than 15 digits have to be put in in order to activate the card. A first disadvantage thereof is that, because of the fact that such long activation codes have to be put in, there is a real chance to make mistakes such as putting in a wrong digit or accidentally omitting a digit. Another disadvantage thereof is that people who are dyslectic or who cannot read at all have troubles to use such cards or in the worst case even cannot use such cards.

Therefore, there exists a need to provide a system comprising a card and a device comprising a touch sensor using another kind of identification of such a card which is more accessible and faster.

### Summary of the Invention

According to a first aspect of the invention, there is provided a system comprising a card and a device comprising a touch sensor, wherein said card comprises one or more visual card marks indicative for actions detectable by said touch sensor that have to be performed to enable identification of said card by said device.

Because visual card marks are present on the card which are indicative for the actions to be taken, said actions being detectable by the touch sensor of the device, this in order to allow identification of the card, the identification is more accessible, even for dyslectic people or people who cannot read, and also can be performed in a much faster way.

A further advantage of such a system is that the identification of the card by the device using the abovementioned visual card marks becomes a pleasant experience. This even allows to couple a game theme to the identification of the card.

In a possible embodiment of a system according to the invention, one or more of said visual card marks are indicative for actions to be performed on said card.

In a further possible embodiment of a system according to the invention, said device comprises a touch screen, a software application and a processor, wherein said software application and said processor are configured to let appear an image comprising visual screen marks on said touch screen which, in combination with one or more of said visual card marks, are indicative for actions detectable by said touch sensor that have to be performed to enable identification of said card by said device.

Touchscreens are common in devices such as game consoles, all-in-one computers, tablet computers and smartphones.

It is therewith a first possibility that said combination of visual card marks and visual screen marks are indicative for actions to be performed on said touch screen.

It is therewith a further possibility that said combination of visual card marks and visual screen marks are indicative for actions to be performed on said card.

It is therewith still a further possibility that said combination of visual card marks and visual screen marks are indicative for actions to be performed on said touch screen in combination with actions to be taken on said card.

Optionally, said card comprises one or more transparent and/or translucent zones being arranged such that said visual screen marks are visible through said transparent and/or translucent zones.

In a possible embodiment of a system according to the invention, said actions to be performed comprise one or more sequences of touches, one or more simultaneous touches and/or one or more sliding touch movements on said card and / or on said touch screen of said device.

In an available embodiment of a system according to the invention, said software application and said processor are further configured to let appear one or more visual confirmation marks indicative for that the correct actions enabling identification of said card has been taken.

In another available embodiment of a system according to the invention, said device comprises a capacitive touch sensor, and said card comprises an electrically conductive pattern, said predetermined pattern comprising one or more capacitively detectable pattern elements which are capacitively detectable by said capacitive touch sensor of said capacitive touch sensing device;and said electrically conductive pattern being arranged such that, when one or more visual card marks are being touched, said capacitively detectable pattern elements are detected and such that said card is identifiable by said capacitive touch sensor by a combined detection of said capacitively detectable pattern elements and said actions.

This enlarges the number of identification possibilities of the card by a capacitive touch sensing device.

Preferably, said electrically conductive pattern therewith comprises one or more capacitively detectable pattern elements and one or more conductive tracks interconnecting at least one capacitively detectable pattern elements with one or more visual card marks.

In a preferred embodiment of a system according to the invention, said card comprises at least three positioning elements which are arranged to enable said software application and said processor to determine the position of said card on said touch screen.

Using three positioning elements allows the software application and the processor to exactly determine the position of the card on the touch screen.

In a first possible embodiment of a system according to the invention, said at least three positioning elements comprise three visual positioning card marks that has to be touched simultaneously when said card is placed on said touch screen to enable said software application and said processor to determine the position of said card on said touch screen.

In this first possible embodiment, when the card comprises three such visual positioning card marks and human fingers are used, these three visual card positioning marks have to be touched using three human fingers in order to determine the position of the card on the touch screen.

In a second possible embodiment of a system according to the invention, said device comprises a capacitive touch sensor and a capacitive touch screen, and said at least three positioning elements comprise an electrically conductive positioning pattern comprising two electrically conductive positioning pattern elements being capacitively detectable by said capacitive touch sensor and being connected to one visual card positioning mark by means of a conductive track, wherein said visual card positioning mark has to be touched when said card is placed on said capacitive touch screen to enable said software application and said processor to determine the position of said card on said capacitive touch screen.

This allows the determination of the place of the card with respect of the capacitive touch screen using only one touch element, more specifically one human finger.

In a third possible embodiment of a system according to the invention, said device comprises a capacitive touch sensor and a capacitive touch screen, and said at least three positioning elements comprise
- at least two visual card positioning marks; and
- an electrically conductive positioning pattern comprising one electrically conductive positioning pattern element which is connected to at least one of said visual card positioning marks by means of a conductive track,
wherein said two visual card positioning marks has to be touched simultaneously when said card is placed on said touch screen to enable said software application and said processor to determine the position of said card on said touch screen.

Touching these two visual card positioning marks with two human fingers has the advantage that the card is lying fixed on the capacitive touch screen, the card can be easily moved over the capacitive touch screen and the card can be placed on the capacitive touch screen without having to hold or to bend the card.

In another preferred system according to the invention, said software application and said processor are configured to let appear one or more visual screen positioning marks on said touch screen enabling a card user to align said card with said one or more visual screen positioning marks in order to determine the position of said card on said touch screen.

This has the advantage that a card user does not have to touch the card with its fingers in order to enable the software application and the processor of the device to determine the position of the card on the touch screen of the device. The user can immediately take the appropriate actions enabling identification of the card by the touch screen. A further advantage is that the user can identify the card using one hand.

It is remarked that enabling a software application and the processor of a device comprising a touch sensor to determine the position of a card with respect to the touch screen, this either by providing at least three positioning elements as described in claim 12, the possible options of positioning elements being further described in claims 13 to 15, either by letting appear one or more visual screen positioning marks on said touch screen enabling a card user to align said card with said one or more visual screen positioning marks, as described in claim 16, can also be applied in cards independent of the fact whether visual card marks are present indicative for actions to be performed detectable by the capacitive touch sensor enabling identification of the card by the device.

According to a further aspect of the invention, there is provided a card for use in a system according to the invention as described above.

According to still a further aspect of the invention, there is provided a device for use in a system according to the invention as described above.

According to a last aspect of the invention, there is provided a software application that can be run on a device as described above.

### Brief Description of the Drawings

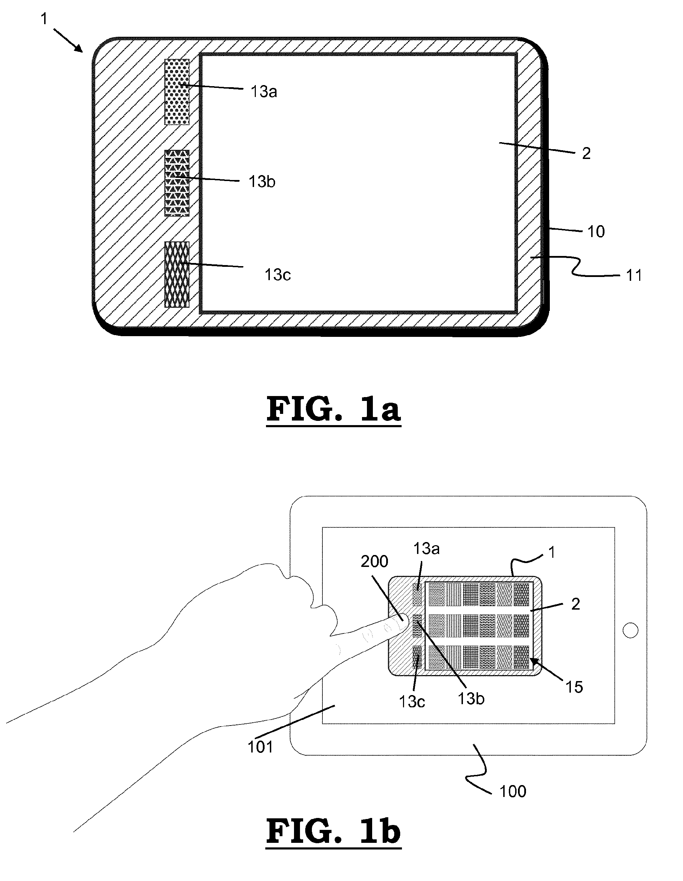

Figure 1a illustrates a card forming part of a first exemplary embodiment of a system according to the invention, the card having three squares in different colours as visual card marks and a transparent zone;

Figure 1b illustrates the appearance of an appropriate image on the touch screen visual through the transparent zone and extending within the surface bounded by this transparent zone when the card as shown in figure 1a is placed on a touch screen of a capacitive touch sensing device and is touched by a human finger;

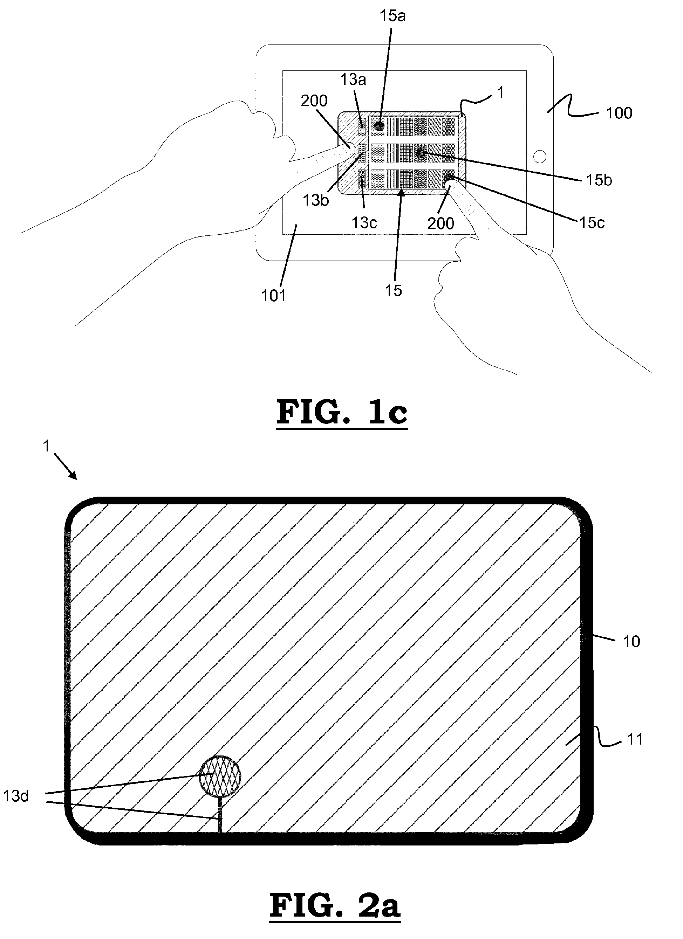

Figure 1c illustrates the places where the card as shown in figure 1a and lying on the touch screen of the capacitive touch sensing device as shown in figure 1b have to be touched in order to identify the card;

Figure 2a illustrates a card forming part of a second exemplary embodiment of a system according to the invention, the card having a visual card mark in the edge of the card;

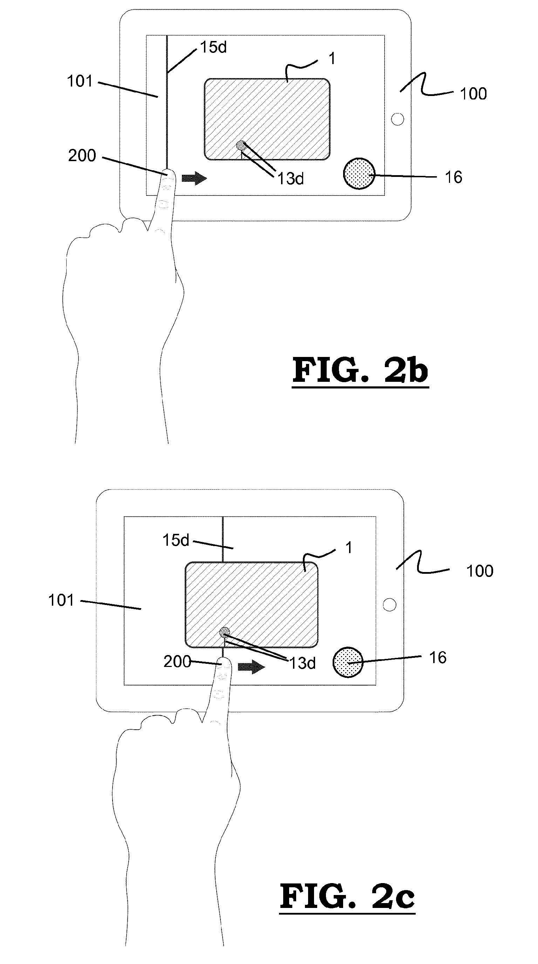

Figure 2b illustrates the appearance of an appropriate image when the card as shown in figure 2a is placed on a touch screen of a capacitive touch sensing device, this image indicating where a human finger has to be placed on the touch screen and this image comprising a visual confirmation mark on the touch screen indicating that the card has not yet been correctly identified, and further illustrates the direction to which a line being a visual screen mark making part of the appeared image has to be moved using a human finger making a sliding movement over the touch screen in order to enable identification of the card;

Figure 2c illustrates the sequel of the movement of the line towards the visual card mark present on the card by means of the sliding movement of the human finger over the touch screen, the visual confirmation mark still indicating that the card has not yet been correctly identified;

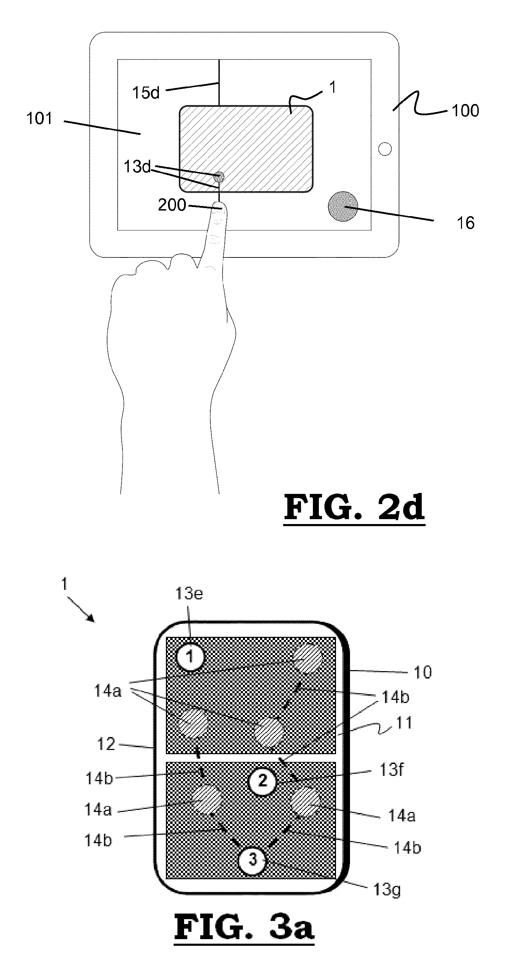

Figure 2d illustrates the change of the colour of the visual confirmation mark present on the touch screen into the same colour as the dot on the card when the line on the touch screen is on the correct place with respect to the dot-on-the-line present on the card;

Figure 3a illustrates a card forming part of a third exemplary embodiment of a system according to the invention, the card comprising three numbered dots being numbered from 1 to 3 as the visual card marks and an electrically conductive pattern comprising a plurality of electrically conductive pattern dots being connected to each other by means of an electrically conductive coupling track, the dot with number three being located above one of the electrically conductive dots, wherein the combination of the detection of the actions that has to performed as indicated by the visual card marks and the detection of the electrically conductive pattern dots enable identification of the card;

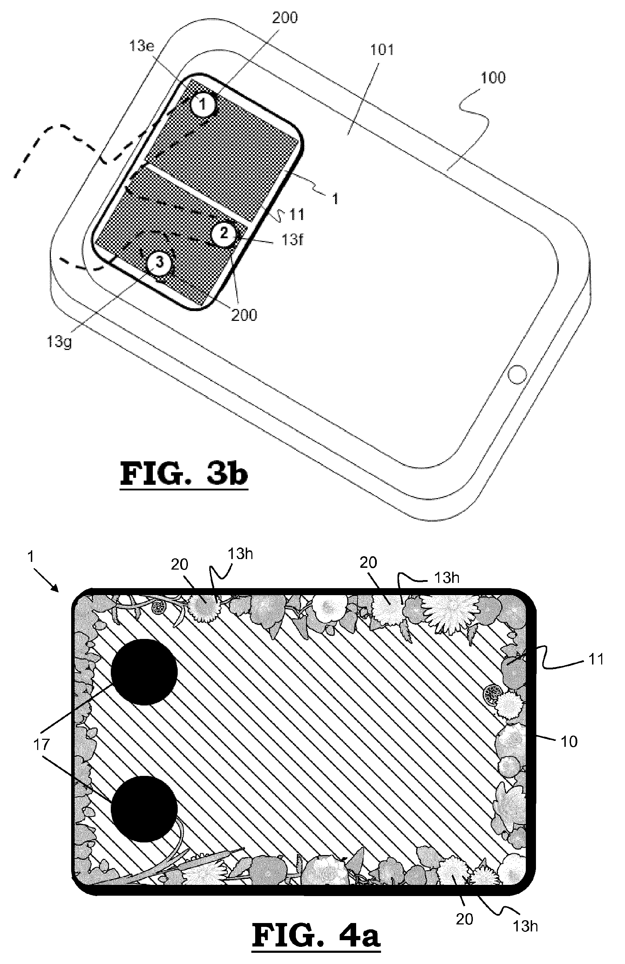

Figure 3b illustrates the card as shown in figure 3a being placed on a touch screen of a capacitive touch sensing device and being touched by three human fingers on the appropriate places indicated by the three numbered dots;

Figure 4a illustrates a card forming part of a fourth exemplary embodiment of a system according to the invention, the card having a flower pattern arranged on the edge of the card, wherein three flowers have a heart executed in the form of a transparent zone and two visual positioning marks arranged to place a human finger on each of these visual positioning marks;

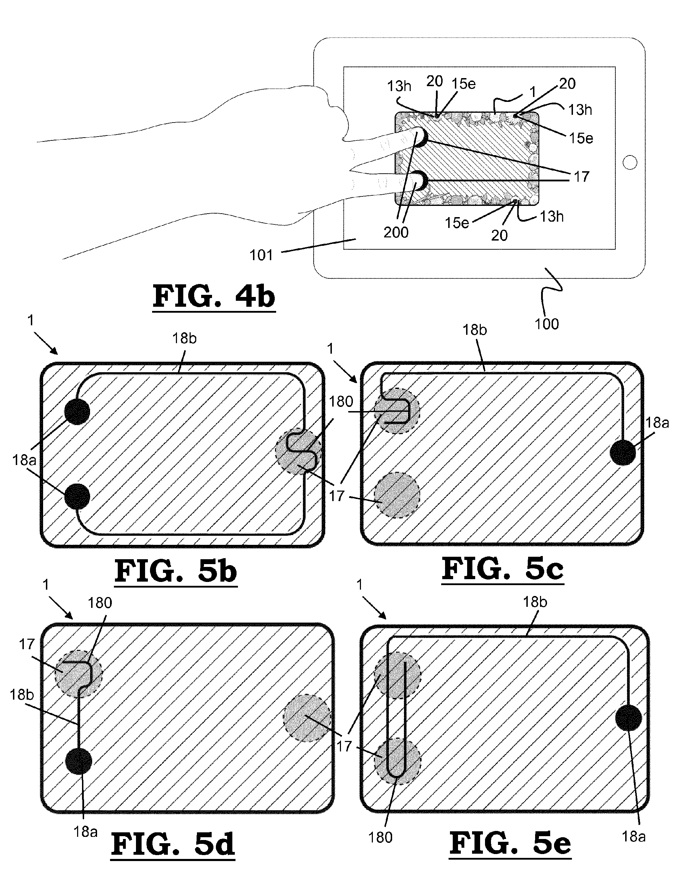

Figure 4b illustrates the lighting up of the transparent zones as shown in figure 4a when the card as shown in figure 4a is placed on a touch screen of a capacitive touch sensing device and each of these visual position marks is touched by a respective human finger; and

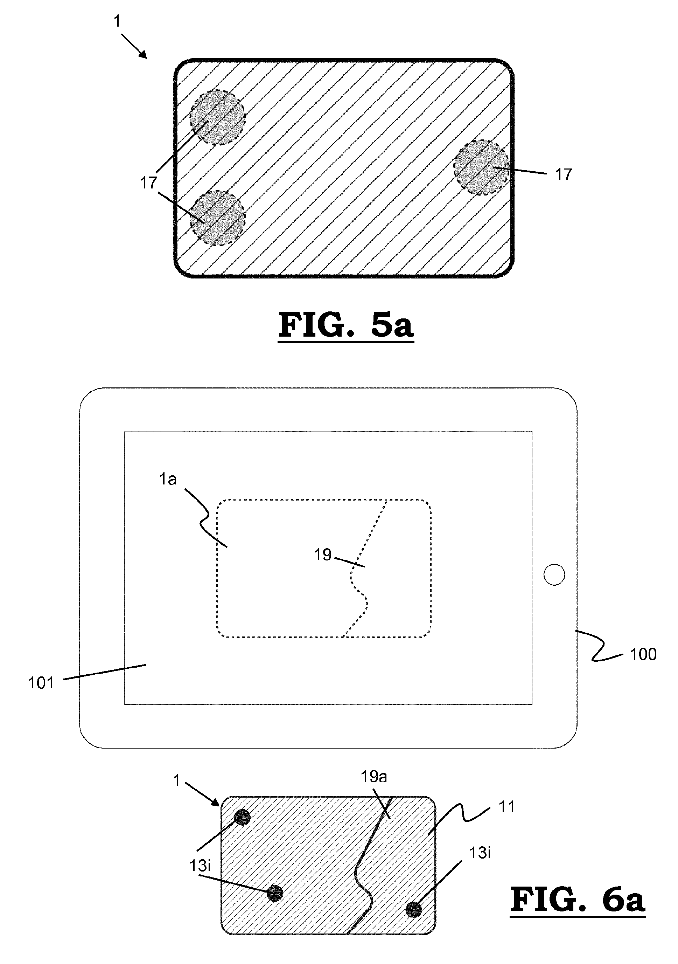

Figure 5a illustrates a card comprising three visual card positioning marks that all three have to be touched simultaneously in order to enable the software application and the processor of the device to determine the position of the card on a touch screen when the visual card positioning marks are being touched;

Figure 5b a card comprising two electrically conductive positioning pattern elements that are connected to one visual card positioning mark to enable the software application and the processor of the device to determine the position of the card on a capacitive touch screen when the visual card positioning mark is being touched;

Figures 5c and 5d illustrate a card comprising one electrically conductive positioning pattern element and two visual card positioning marks, wherein the electrically conductive positioning pattern element is connected to one of the visual card positioning marks, and wherein the two visual card positioning marks have to be touched simultaneously in order to enable the software application and the processor of the device to determine the position of the card on a capacitive touch screen when the visual card positioning marks are being touched;

Figure 5e illustrates a card comprising one electrically conductive positioning element and two visual card positioning marks, wherein the electrically conductive positioning pattern element is connected to both visual card positioning marks, and wherein the two visual card positioning marks have to be touched simultaneously in order to enable the software application and the processor of the device to determine the position of the card on a capacitive touch screen when the visual card positioning marks are being touched;

Figure 6a illustrates an exemplary embodiment of a system according to the invention, comprising a card and a device having a touch screen and a touch sensor, the card comprising three visual card marks that has to be touched to enable identification of the card by the device and the touch screen having a visual screen positioning mark corresponding the visual card positioning mark indicating where the card has to be positioned on the touch screen; and

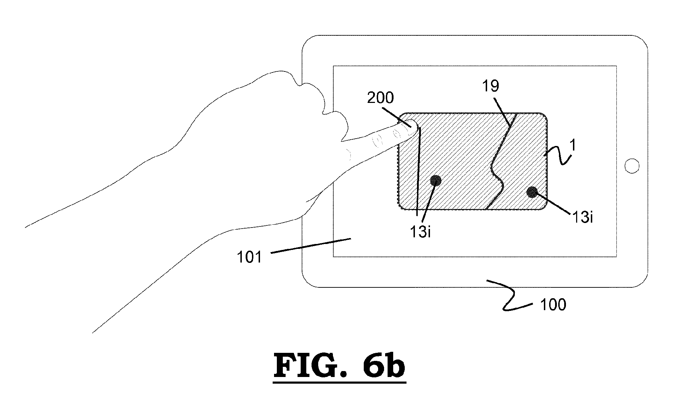

Figures 6b illustrates the system as shown in figure 6a wherein the card is positioned at the appropriate place on the touch screen and one of the three visual card marks is being touched by a human finger.

### Detailed Description of Embodiment(s)

The system according to the invention comprises:
- a touch sensing device (100) (see figures 1b, 1c, 2b - 2d, 3b, 4b and 6b) at least comprising a touch sensor (not shown on the figures); and
- a card (1) (see figures 1a - 1c, 2a - 2d, 3a, 3b, 4a, 4b, 5a - 5e, 6a and 6b).

The touch sensing device (100) (hereafter further called "the device (100)") preferably further comprises a touch screen (101). Preferably, a capacitive touch sensing device (100), and more preferably, a multi-touch capacitive sensing device (100) is used.

A card (1) according to the invention at least comprises a substrate (10) and an information layer (11) at least partially being applied onto said substrate (10). Said card (1) furthermore optionally can comprise one or more transparent and / or translucent zones (2, 20) out of a transparent / translucent material, as for instance is the case with the card (1) as shown in figures 1a - 1c and figures 4a and 4b.

Said substrate (10) preferably is made out of an electrically non-conductive material, for instance paperboard, paper, derived timber products, composite materials, laminates, synthetic material, etc.

Said information layer (11) preferably is a printed layer and is applied on at least part of said substrate (10). Most preferably, said information layer (11) is printed on the whole surface of the substrate (10). It is therewith preferred not to apply said information layer (11) on transparent and/or translucent zones (2, 20). This however does not exclude that these zones (2, 20) can have a transparent and/or translucent print (not shown in the figures).

The information layer (11) preferably is covered with a transparent coating layer (not shown in the figures), this transparent coating layer preferably being a printed layer. Also here, it is preferred not to apply said transparent coating layer on the transparent and/or translucent zones (2, 20), this however not being excluded.

As can be seen in figures 1a - 1c, 2a - 2d, 3a, 3b, 4a, 4b, 6a and 6b, the information layer (11) of the card (1) according to the invention comprises one or more visual card marks (13a - 13i). Said visual card marks (13a - 13i) are therewith indicative for actions detectable by the touch sensor that have to be performed to enable identification of the card (1) by the touch sensing device (100). Preferably, as touch elements, human fingers (200) (as can be seen in figures) are used to perform said actions. However, also specially adapted styluses (not shown on the figures) could be used therefore.

The actions that have to be performed which are detectable by the touch sensor in order to identify the card (1) by means of the device (100) can be of different types, such as amongst others
- a sequence of touches;
- one or more simultaneous touches;
- one or more sliding touch movements; or
- a combination thereof.

These actions can either be performed on the card (1) itself (see figures 1c, 3b, 4b and 6b), either on the touch screen (101) of the device (100) (see figures 2b & 2c), or on both (not shown on the figures).

It is therewith a possibility to perform actions on the card (1) itself solely using visual card marks (13a - 13i), or in other words to use visual marks only present on the card (1). This is for instance the case in the third embodiment of a system according to the invention as is shown in figures 3a and 3b. As can be seen in these figures, on the card (1) forming part of this third embodiment of the system, a plurality of visual card marks (13e - 13g) are present which are indicative for how these visual card marks (13e - 13g) must be touched. In this embodiment, three numbered dots (13e - 13g) are present, these dots being numbered from 1 to 3. In order to identify this card (1), as can be seen in figure 3b, the user of this card (1) can place the card (1) on the touch screen (101) of the device (100) and then either touch the numbers 1 to 3 sequentially (not shown on the figure) or at the same time, preferably using three human fingers (200) (as can be seen in figure 3b).

The card (1) as shown in figure 3a furthermore comprises an electrically conductive pattern (14a, 14b). This electrically conductive pattern (14a, 14b) comprises a number of capacitively detectable pattern elements, in this embodiment in the form of six electrically conductive dots (14a) which are interconnected to each other by means of an electrically conductive coupling track (14b).

It is remarked that cards (1) having such an electrically conductive pattern (14a - 14c) as described above can only be used in combination with a capacitive touch sensing device (100) having a capacitive touch sensor and a capacitive touch screen (101).

In order to be able to capacitively detect the capacitively detectable pattern elements (14a), one of the visual screen marks (13e - 13g), in this embodiment visual screen mark (13g) with number 3, is situated above one of the capacitively detectable pattern elements (14a) or the electrically conductive track (14b) such that, when this visual screen mark (13b) is being touched, all capacitively detectable pattern elements (14a) of the electrically conductive pattern (14a, 14b) are detected by the capacitive touch sensor of the capacitive touch sensing device (100).

In this way, a combination of the detection of the performed actions and the capacitively detectable pattern elements (14a) by the capacitive touch sensor of the device (100) enables the identification of the card (1). In order words, touching sequentially or simultaneously the numbered circles (13e - 13g) as present on the card (1), these touches being detectable by the capacitive touch sensor of the device (100), are the actions to be performed on the card (1) in order to identify the card (1) by means of the device (100).

It is remarked that the electrically conductive pattern (14a, 14b) can comprise any number of capacitively detectable pattern elements (14a) in any form, on the condition that, when the appropriate visual card mark(s) (13e - 13g) is (are) touched, the capacitively detectable pattern elements (14a) are detected by the capacitive touch sensor of the device (100).

It is furthermore remarked that the electrically conductive pattern can be arranged as a grid of electrically conductive lines (not shown on the figures) being applied on at least a part of the substrate (10). This grid may consist of a regular pattern of electrically conductive lines, but may also consist of an irregular arrangement of such electrically conductive lines.

It is furthermore also possible to perform actions on the card (1) using a combination of visual card marks (13a - 13i) and visual screen marks (15a - 15e). Therefore, the card (1) comprises one or more transparent and / or translucent zones (2, 20) which allow to make visible an image (15) which appears on the touch screen (101) of the device (100) and comprising these visual screen marks (15a - 15e) through these transparent / translucent zones (2, 20). In order to let appear this image (15) on the touch screen (101) of the device (100), the device (100) comprises a software application (also called an "app") and a processor (not shown in the figures). The instructions of the software application are then read by the processor and are consecutively executed by the processor. The combination of the one or more visual screen marks (15a - 15e) and the one or more of said visual card marks (13a - 13i) are then indicative for the actions to be performed, said actions being detectable by the capacitive touch sensor of the device (100), this to enable identification of the card by the device (100).

Exemplary embodiments of this second possibility of performing actions on the card (1) itself using a combination of visual card marks (13a - 13i) and visual screen marks (15a - 15e) are the first and fourth embodiment of a system according to the invention as shown in figures 1a - 1c and 4a and 4b.

In the first embodiment, the information layer (11) of the card (1) as shown in figure 1a comprises a plurality of visual card marks, in this embodiment in the form of three differently coloured squares (13a, 13b and 13c). The card (1) also comprises a transparent zone (2). As can be seen in figures 1b and 1c, when the card (1) is placed on the touch screen (101) of the device (100) and is touched, preferably by means of a human finger (200), the software application and the processor let appear an image (15) within the area bounded by the transparent zone (2). In this embodiment, the image (15) consists of three lines of a plurality of arbitrary differently coloured squares, each line being placed next to a respective visual card mark (13a - 13c). In order to correctly identify the card (1) by means of the device (100), the user has to touch the transparent zone (2) sequentially or at the same time at the height of the places where the visual screen marks (15a - 15c) having the same colour as the visual card marks (13a - 13c) present in the information layer (11) of the card (1) appeared in this transparent zone (2). In other words, touching
- square (15a) having the same colour as square (13a),
- square (15b) having the same colour as square (13b); and
- square (15c) having the same colour as square (13c);
these touches being detectable by the touch sensor, are the actions to be performed on the card (1) in order to identify the card (1) by means of the device (100), these squares (15a - 15c) being generated by the software application and the processor of the device (100), appearing on the touch screen (101) of the device (100) and being visible through the transparent zone (2).

In the fourth embodiment, the informative layer (11) of the card (1) as shown in figure 4a comprises a flower pattern applied on the edge of the card (1). A plurality of flowers of this flower pattern, i.e. flowers (13a, 13b and 13c), have a heart in the form of a transparent zone (20). As can be seen in figure 4b, when the card (1) is placed on the touch screen (101) of the device (100) and is being touched, preferably by means of at least one human finger (200), the software application and the processor are configured to let appear an image (15) comprising visual screen marks (15e) which are only visible through the transparent hearts (20) of the respective flowers, having as the effect that these transparent hearts (20) lighten up. In order to identify the card (1), these lightened up transparent hearts (20) then have to be touched sequentially or simultaneously. In other words, touching the transparent and lightened up hearts (20), these touches being detectable by the touch sensor, are the actions to be performed on the card (1) in order to identify the card (1) by means of the device (100), these transparent hearts (20) lighting up because of the appearance of an image (15) on the touch screen (101) of the device (100) being visible through the transparent hearts (20), this image (15) being generated by the software application and the processor of the device (100) at the moment the card (1) is touched.

It is finally also possible to perform actions on the touch screen (101) of the device 100) using a combination of visual card marks (13a - 13h) and visual screen marks (15a - 15e) of an image (15) appearing on the touch screen (101) of the device (100) generated by the software application and the processor of the device (100), these actions being detectable by the touch sensor of the device (100) in order to identify the card (1).

An exemplary embodiment thereof is shown in the second embodiment of a system according to the invention as shown in figures 2a - 2d. Therein, a card (1) is provided having an information layer (11) comprising a visual card mark (13d), more specifically a coloured dot placed on a line arranged (hereafter further called 'dot-on-the-line') in the edge region of the card (1). When this card (1) is placed on the touch screen (101) of the device (100), then an image (15) comprising a visual screen mark, here in the form of a line (15d), and a visual confirmation mark (16), here in the form of a dot in a certain colour different then the colour of the dot of the dot-on-the-line (13d) present on the card (1), appears on the touch screen (101) of the device generated by the software application and the processor. A user then has to touch the line (15d) and has to draw the line by means of a sliding movement, preferably using a human finger (200), towards the dot-on-the-line (13d) (see figures 2b and 2c) until the line (15d) reaches the area of the dot-on-the-line (13d) and the colour of the visual confirmation mark (16) is equal to the colour of the dot of the dot-on-the-line (13d) on the card (1) indicating that the card (1) has been correctly identified. In other words, performing a sliding touch movement, this touch sliding movement being detectable by the touch sensor, is the action to be performed on the card (1) in order to identify the card (1) by means of the device (100), the image (15) being formed out of the line (15d) and the visual confirmation mark (16) being generated by the software application and the processor of the device (100) on the touch screen (101) of the device (100) at the moment the touch screen (101) is being touched.

As already mentioned above, in this second embodiment of a system according to the invention, in order to indicate to the user of the card (1) that the correct actions have been taken enabling identification of the card (1), or in other words the correct "identification code" was given in, a double feedback is incorporated in the visual card marks (13a -13h) and/or the visual screen marks (15a - 15e). In this second embodiment, this double feedback consists of
1/ the location of line (15d) on the touch screen (101) with respect to the dot-on-the-line (13d) on the card (1); and
2/ the visual confirmation screen mark (16) matches the coloured dot of the dot-on-the-line (13d) on the card (1).

It is herewith remarked that the double feedback indicating to the user of a card (1) according to the invention that the correct actions were taken to enable identification of the card (1) are not limited to the example above, but can also consist of any other combination of
1/ a location of a visual card mark (13a - 13i) on the card (1) with respect to a visual screen mark (15a - 15e) on the touch screen (101) or vice versa; and
2/ a colour on the card (1) with respect to a colour on the touch screen (101) or vice versa, or a change in the colour or the appearance of a symbol on the touch screen (101).

In this way, it can be checked by the user of the card (1), when the visual card mark (13a - 13i) and the visual screen mark (15a - 15e) correspond, if also the colour thereof corresponds or the correct colour of the symbol or the correct symbol appears on the touch screen (101).

In this second embodiment, the visual confirmation mark (16) is a dot in a certain colour. It is however remarked that this visual confirmation mark (16) can be executed in any symbol in any other colour.

The visual card marks (13a - 13i) are preferably applied on said card (1) using digital or variable data printing processes. This has the advantage that variable visual card marks (13a - 13i) can be printed in a simple and relatively cheap way, without the need of tooling in order to start up the printing presses. By printing different kinds of visual card marks (13a - 13i) on different places and in different quantities, a very high number of cards (1) with unique identification possibilities can be produced.

In this embodiment, these visual positioning marks (17) are executed in the form of black dots. It is however remarked that these visual position marks (17) can have any other form in any colour.

It is remarked that in the fourth embodiment of a system according to the invention, the software application and the processor are configured to lighten up the transparent zones (20) within the flowers (13a - 13c) when the visual position marks (17) are being simultaneously touched, preferably using two human fingers (200). This is however optionally. The software application and the processor could however also be configured to lighten up these transparent zones (20) when the card (1) is arbitrary touched.

In order to enable the software application and the processor of the device (100) to determine the position of the card (1) on the touch screen (101) of the device (100), a first possibility is to provide the card (1) with at least three positioning elements (17a, 18, 18a, 18b) that are detectable in any or other way when the card (1) is being touched. These three positioning elements (17a, 18b, 18a, 18b) can be arranged in different configurations resulting in one touch, or two or three simultaneous touches being necessary in order to determine the position of the card (1) on the touch screen when the card (1) is present thereon.

A first possibility as can be seen in figure 5a is to provide three visual card positioning marks (17) that has to be touched simultaneously, for instance using three human fingers, in order to enable the software application and the processor to determine the position of the card (1) on the touch screen (101) of the device (100).

A second possibility as can be seen in figures 5b - 5e is to combine visual card positioning marks (17) with an electrically conductive pattern (18a, 18b, 180) comprising electrically conductive and capacitively detectable pattern elements (18a) being connected with visual card positioning marks (17) by means of one or more conductive tracks (18b). It is remarked that cards (1) having such an electrically conductive pattern (18a, 18b, 180) can only be used in combination with capacitive touch sensing devices (100) having a capacitive touch sensor and a capacitive touch screen (101).

As can be seen in figures 5b - 5e, at the height where these pattern elements (18a) are situated, the electrically conductive track (18b) preferably makes a number of turns (180) in order to ensure that the user of the card (1) touches the electrically conductive track (18b) with its finger. These turns (180) enlarge the place where the user can touch the card (1) in order to touch the conductive track (18b).

This electrically conductive pattern (18a, 18b, 180) therewith can have different configurations.

In a first possibility as shown in figure 5b, the three positioning elements consist of two electrically conductive and capacitively detectable positioning pattern elements (18a), forming part of the electrically conductive pattern (18a, 18b, 180), and a visual card positioning mark (17) (indicated in a dashed line) which is connected to both positioning pattern elements (18a) by means of the conductive track (18b). In this possibility, when this card (1) is placed on a capacitive touch screen (101), the position of the card (1) on this capacitive touch screen (101) can be determined by the software application and the processor of the capacitive touch sensing device (100) by touching this one visual card positioning mark (17).

In a second possibility as shown in figures 5c and 5d, the three positioning elements consist of one electrically conductive and capacitively detectable positioning pattern element (18a), forming part of the electrically conductive pattern (18a, 18b, 180), and two visual card positioning marks (17) (indicated in a dashed line), wherein one of these visual card positioning marks (17) is connected with the electrically conductive pattern (18a, 18b, 180). One of these two visual card positioning marks (17) is therewith located above the turn (180) of the electrically conductive track (18b) and one of these two visual card positioning marks (17) is therewith located above the electrically conductive and capacitively detectable pattern element (18a).

In a third possibility as shown in figure 5e, the three positioning elements consists of one electrically conductive and capacitively detectable positioning pattern element (18a), forming part of the electrically conductive pattern (18a, 18b, 180), and two visual card positioning marks (17) (indicated in a dashed line), wherein both visual card positioning marks (17) are connected with the electrically conductive pattern element (18a) by means of the electrically conductive track (18b).

In all three possibilities as described above and as shown in figures 5c, 5d and 5e, when this card (1) is placed on a capacitive touch screen (101), the position of the card (1) on this capacitive touch screen (101) can be determined by the software application and the processor of the capacitive touch sensing device (100) by touching two visual card positioning marks (17).

It is remarked that the electrically conductive positioning pattern (18) can comprise any number more than one of capacitively detectable pattern elements (18a) in any form, on the condition that these capacitively detectable positioning pattern elements (18a) are detected by the capacitive touch sensor when being touched.

It is furthermore remarked that the electrically conductive patterns (14a - 14c, 18) can be formed out of a metal foil such as aluminium, copper, iron, or can be formed out of a conductive ink or a conductive coating. The metal foil for instance can be applied to the substrate (10) by means of hot stamping or can be affixed to the substrate (10) by means of an adhesive layer (not shown on the figures).

In order to enable the software application and the processor of the device (100) to determine the position of the card (1) on the touch screen (101) of the device (100), a second possibility is to enable the software application and the processor to let appear one or more visual screen positioning marks (1a, 19) on the touch screen (101) indicative for the place the card (1) has to be positioned on the touch screen (101).

An exemplary embodiment of a system according to the invention as shown in figures 6a and 6b, comprises a touch sensing device (100) having a touch sensor and a touch screen (101). As can be seen in figure 6a, the card (1) comprises three visual card marks (13i) indicating which detectable actions has to be taken enabling identification of the card (1). Furthermore, on the card (1), a visual card positioning mark, in the form of a curved line (19a), is indicated. On the touch screen (101) of the device (100), the same visual screen positioning mark (19) is shown. As can be seen in figure 6b, the card (1) has to be placed on the touch screen (101) of the device (100) such that both curved lines (19, 19a) coincide. At that moment, the card (1) is on its right place on the touch screen (101).

This last described kind of determination of the place of a card (1) according to the invention on a touch screen (101) is especially interesting when a card (1) is used in combination with an iPhone. In the system as disclosed in figures 4a and 4b, the card (1) has to be touched using two human fingers of one hand of a user simultaneously at two places on the card (1), i.e. on the two visual card positioning marks (17) indicated on the card (1), before the identification of the card (1) can be started using the other hand of the user. This is very annoying when using an iPhone. With the system as shown in figures 6a and 6b, the user can hold the iPhone with one hand and perform the necessary actions enabling identification of the card (1) using the other hand.

The system according to the invention is particularly useful to be applied for playing cards, collector cards, gift cards, customer loyalty cards, promotion cards and other marketing applications, entry cards, member identification cards and other certificates of authenticity, lottery cards, cards for games of chance, payment cards, and any other identification.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system comprising a card (1) and a device (100) comprising a touch sensor, **CHARACTERISED IN THAT** said card (1) comprises one or more visual card marks (13a - 13h) indicative for actions detectable by said touch sensor that have to be performed to enable identification of said card (1) by said device (100).

2. A system according to claim 1, **CHARACTERISED IN THAT** one or more of said visual card marks (13a -13i) are indicative for actions to be performed on said card (1).

3. A system according to claim 1 or 2, **CHARACTERISED IN THAT** said device (100) comprises a touch screen (101), a software application and a processor, wherein said software application and said processor are configured to let appear an image (15) comprising visual screen marks (15a - 15e) on said touch screen (101) which, in combination with one or more of said visual card marks (13a - 13h), are indicative for actions detectable by said touch sensor that have to be performed to enable identification of said card (1) by said device (1).

4. A system according to claim 3, **CHARACTERISED IN THAT** said combination of visual card marks (13a - 13i) and visual screen marks (15a - 15e) are indicative for actions to be performed on said touch screen (101).

5. A system according to claim 3, **CHARACTERISED IN THAT** said combination of visual card marks (13a - 13i) and visual screen marks (15a - 15e) are indicative for actions to be performed on said card (1).

6. A system according to claim 3, **CHARACTERISED IN THAT** said combination of visual card marks (13a - 13i) and visual screen marks (15a - 15e) are indicative for actions to be performed on said touch screen (101) in combination with actions to be taken on said card (1).

7. A system according to any one of claims 3 to 6, **CHARACTERISED IN THAT** said card (1) comprises one or more transparent and/or translucent zones (2, 20) being arranged such that said visual screen marks (15a - 15e) are visible through said transparent and/or translucent zones (2, 20).

8. A system according to any one of claims 3 to 7, **CHARACTERISED IN THAT** said actions to be performed comprise one or more sequences of touches, one or more simultaneous touches and/or one or more sliding touch movements on said card (1) and / or on said touch screen (101) of said device (100).

9. A system according to any one of claims 3 to 8, **CHARACTERISED IN THAT** said software application and said processor are further configured to let appear one or more visual confirmation marks (16) indicative that the correct actions enabling identification of said card (1) have been taken.

10. A system according to any one of claims 1 to 9, **CHARACTERISED IN THAT** said device (100) comprises a capacitive touch sensor, and **in that** said card (1) comprises an electrically conductive pattern (14a, 14b), said predetermined pattern (14a, 14b) comprising one or more capacitively detectable pattern elements (14a) which are capacitively detectable by said capacitive touch sensor of said capacitive touch sensing device (100), and said electrically conductive pattern (14a, 14b) being arranged such that, when one or more visual card marks (13a - 13i) are being touched, said capacitively detectable pattern elements (14a) are detected, and such that said card (1) is identifiable by said capacitive touch sensing device (100) by a combined detection of said capacitively detectable pattern elements (14a) and said actions.

11. A system according to claim 10, **CHARACTERISED IN THAT** said electrically conductive pattern (14a, 14b) comprises one or more capacitively detectable pattern elements (14a) and one or more conductive tracks (14b) interconnecting at least one capacitively detectable pattern elements (14a) with one or more visual card marks (13a - 13i).

12. A system according to any one of claims 3 to 11, **CHARACTERISED IN THAT** said card (1) comprises at least three positioning elements (17a, 18, 18a, 18b) which are arranged to enable said software application and said processor to determine the position of said card (1) on said touch screen (101).

13. A system according to claim 12, **CHARACTERISED IN THAT** said at least three positioning elements comprise three visual positioning card marks (17) that has to be touched simultaneously when said card (1) is placed on said touch screen (101) to enable said software application and said processor to determine the position of said card (1) on said touch screen (101).

14. A system according to claim 12, **CHARACTERISED IN THAT** said device (100) comprises a capacitive touch sensor and a capacitive touch screen (101), and **in that** at least three positioning elements comprise an electrically conductive positioning pattern (18a, 18b, 180) comprising two electrically conductive positioning pattern elements (18a) being capacitively detectable by said capacitive touch sensor and being connected to one visual card positioning mark (17) by means of a conductive track (18b), wherein said visual card positioning mark (17) has to be touched when said card (1) is placed on said capacitive touch screen (101) to enable said software application and said processor to determine the position of said card (1) on said capacitive touch screen (101).

15. A system according to claim 12, **CHARACTERISED IN THAT** said device (100) comprises a capacitive touch sensor and a capacitive touch screen (101), and **in that** said at least three positioning elements comprise
- at least two visual card positioning marks (17); and
- an electrically conductive positioning pattern (18a, 18b, 180) comprising one electrically conductive positioning pattern element (18a) being capacitively detectable by said capacitive touch sensor and being connected to at least one of said visual card positioning marks (17) by means of a conductive track (18b), wherein said at least two visual card positioning marks (17) has to be touched simultaneously when said card (1) is placed on said capacitive touch screen (101) to enable said software application and said processor to determine the position of said card (1) on said capacitive touch screen (101).

16. A system according to claim any one of claims 3 to 15, **CHARACTERISED IN THAT** said software application and said processor are configured to let appear one or more visual screen positioning marks (19) on said touch screen (101) enabling a card user to align said card (1) with said one or more visual screen positioning marks (19) in order to determine the position of said card (1) on said touch screen (101).

17. A card (1) for use in a system according to any one of claims 1 to 16.

18. A device (100) for use in a system according to any one of claims 1 to 16.

19. A software application to be run on the device according to claim 18.
